(19) **Europäisches Patentamt**

**European Patent Office**

**Office européen des brevets**

(11) **EP 1 270 901 A2**

(12) **EUROPEAN PATENT APPLICATION**

(43) Date of publication:
**02.01.2003 Bulletin 2003/01**

(51) Int Cl.⁷: **F02B 75/06**, F16F 15/14,
F16F 15/30

(21) Application number: **02014357.4**

(22) Date of filing: **27.06.2002**

| | |
|---|---|
| (84) Designated Contracting States:<br>**AT BE CH CY DE DK ES FI FR GB GR IE IT LI LU MC NL PT SE TR**<br>Designated Extension States:<br>**AL LT LV MK RO SI** | • **Ota, Masaki**<br>**Kariya-shi, Aichi-ken (JP)**<br>• **Adaniya, Taku**<br>**Kariya-shi, Aichi-ken (JP)**<br>• **Kanai, Akinobu**<br>**Kariya-shi, Aichi-ken (JP)**<br>• **Suzuki, Takahiro**<br>**Kariya-shi, Aichi-ken (JP)** |
| (30) Priority: **28.06.2001 JP 2001196630** | |
| (71) Applicant: **Kabushiki Kaisha Toyota Jidoshokki**<br>**Kariya-shi, Aichi-ken (JP)** | (74) Representative:<br>**Leson, Thomas Johannes Alois, Dipl.-Ing.**<br>**Tiedtke-Bühling-Kinne & Partner GbR,**<br>**TBK-Patent,**<br>**Bavariaring 4**<br>**80336 München (DE)** |
| (72) Inventors:<br>• **Kawata, Takeshi**<br>**Kariya-shi, Aichi-ken (JP)**<br>• **Kawaguchi, Masahiro**<br>**Kariya-shi, Aichi-ken (JP)** | |

(54) **Rotor**

(57) A rotor has a main body (42). A weight guide (45, 49, 51, 53, 55, 57) is recessed in the main body (42). A weight accommodated in the weight guide contacts with and rolls on a weight guiding surface. The weight swings like a pendulum about a second axis that is parallel to and offset from the rotation axis. The weight guiding surface guides the weight to keep the weight moving within the guiding surface.

**Fig.2(a)**

**Fig.2(b)**

**EP 1 270 901 A2**

## Description

The present invention relates to a rotor having a weight that swings like a pendulum.

Japanese Laid-Open Patent Publication No. 6-193684 discloses a rotor having a flywheel, in which a weight guide (weight receptacle) is defined. A weight (damper mass) is accommodated in the weight guide (weight receptacle). The weight rolls in the weight receptacle. A projection having a rectangular cross-section is formed in one of the weight guide and the weight. A groove having a rectangular cross section is formed in the other one of the guide and the weight. The projection and the groove extend along the rolling direction of the weight and engage with each other. The engagement of the projection and the groove prevents the weight from moving in the axial direction of the rotor. Thus, the weight does not collide with the walls of the weight guide, which suppresses the noise due to collision.

However, a clearance must be created between the projection and the groove to allow the weight to swing like a pendulum. The clearance permits the weight to move in the axial direction. The weight therefore chatters and produces noise.

Accordingly, it is a major objective of the present invention to provide a rotor that suppresses resonance by pendulum-like motion of a weight accommodated in a weight guide and reduces noise produced by collision of the weight against the walls of the receptacle.

To achieve the foregoing and other objectives and in accordance with the purpose of the present invention, a rotor having a main body, a weight guide, and a weight is provided. The weight guide is formed in the main body. The cross-section of the weight guide is arcuate along a plane perpendicular to the rotation axis. The weight is accommodated in the weight guide. The weight has a circular cross-section. The weight rolls along a weight guiding surface and swings like a pendulum about a second axis. The second axis is separated from the rotation axis by a predetermined distance and is parallel to the rotation axis. The weight guiding surface has a portion that contacts the weight. The cross-section of the contacting portion along a plane that contains the second axis is inclined relative to the second axis such that the weight is prevented from moving toward the second axis.

Other aspects and advantages of the invention will become apparent from the following description, taken in conjunction with the accompanying drawings, illustrating by way of example the principles of the invention.

The invention, together with objects and advantages thereof, may best be understood by reference to the following description of the presently preferred embodiments together with the accompanying drawings in which:

Fig. 1 is a cross-sectional view illustrating a compressor having a pulley according to one embodiment of the present invention;

Fig. 2(a) is a front view illustrating the pulley of Fig. 1;

Fig. 2(b) is a cross-sectional view taken along line b-b of Fig. 2(a);

Fig. 3(a) is an enlarged partial cross-sectional view illustrating a groove and a roller (weight) according to another embodiment;

Fig. 3(b) is an enlarged partial cross-sectional view illustrating a groove and a roller (weight) according to another embodiment;

Fig. 3(c) is an enlarged partial cross-sectional view illustrating a groove and a roller (weight) according to another embodiment; and

Fig. 3(d) is an enlarged partial cross-sectional view illustrating a groove and a roller (weight) according to another embodiment.

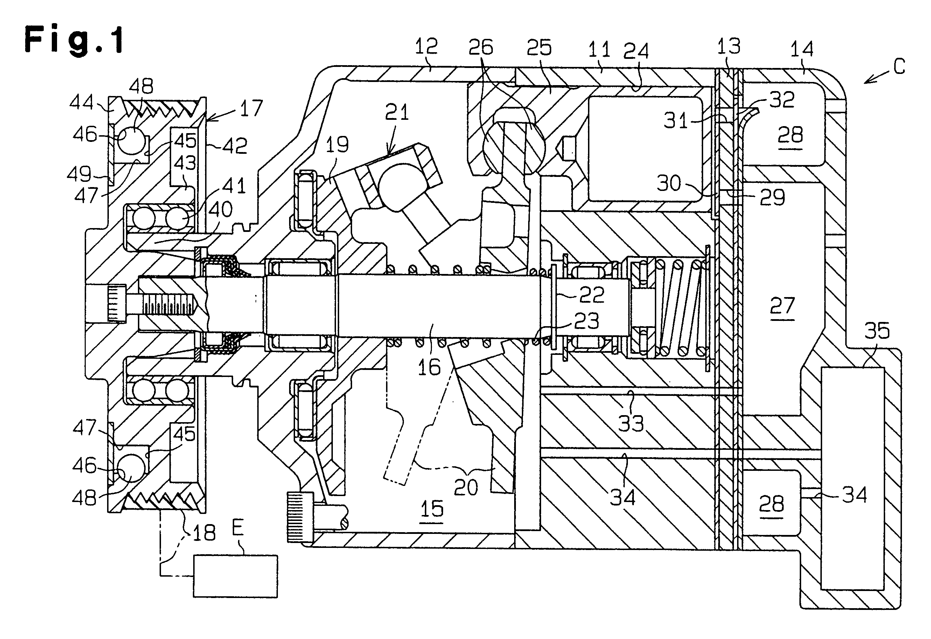

A compressor C according to one embodiment of the present invention will now be described with reference to Figs. 1 to 2(b). The left end of the compressor C in Fig. 1 is defined as the front of the compressor, and the right end is defined as the rear of the compressor C.

As shown in Fig. 1, the compressor C includes a cylinder block 11, a front housing member 12, a valve plate assembly 13, and a rear housing member 14. The front housing member 12 is secured to the front end of the cylinder block 11. The rear housing member 14 is secured to the rear end of the cylinder block 11 with the valve plate assembly 13 in between. The cylinder block 11, the front housing 12, the valve plate assembly 13, and the rear housing member 14 form the housing of the compressor C.

The cylinder block 11 and the front housing member 12 define a crank chamber 15 in between.

A rotary shaft, which is a drive shaft 16 in this embodiment, is housed in the compressor housing and extends through the crank chamber 15.

A cylindrical support 40 is formed at the front end of the front housing member 12. The front end portion of the drive shaft 16 extends through the front wall of the front housing member 12 and is located in the cylindrical support 40. The front end portion of the drive shaft 16 is coupled to an external drive source, which is a vehicular engine E in this embodiment, by a rotor, which is a pulley 17 in this embodiment, and a belt 18 engaged with the pulley 17.

A lug plate 19 is coupled to the drive shaft 16 and is located in the crank chamber 15. The lug plate 19 rotates integrally with the drive shaft 16. A cam plate, which is a swash plate 20 in this embodiment, is housed in the crank chamber 15. The swash plate 20 slides along and inclines with respect to the drive shaft 16. The swash plate 20 is coupled to the lug plate 19 by the hinge mechanism 21. The lug plate 19 permits the swash plate 20 to rotate integrally with the drive shaft 16 and to incline with respect to the drive shaft 16 while sliding along the rotation axis of the drive shaft 16.

A snap ring 22 is fitted about the drive shaft 16. A spring 23 extends between the snap ring 22 and the swash plate 20. The snap ring 22 and the spring 23 limit the minimum inclination angle of the swash plate 20. At the minimum inclination angle of the swash plate 20, the angle defined by the swash plate 20 and the axis of the drive shaft 16 is closest to ninety degrees.

Cylinder bores 24 (only one is shown in Fig. 1) are formed in the cylinder block 11. The cylinder bores 24 are located about the rotation axis of the drive shaft 16. A single-headed piston 25 is reciprocally housed in each cylinder bore 24. The front and rear openings of each cylinder bore 24 are closed by the associated piston 25 and the valve plate assembly 13. A compression chamber is defined in each cylinder bore 24. The volume of the compression chamber changes according to the reciprocation of the corresponding piston 24. Each piston 25 is coupled to the peripheral portion of the swash plate 20 by a pair of shoes 26. When the swash plate 20 is rotated by rotation of the drive shaft 16, the shoes 26 converts the rotation into reciprocation of each piston 25.

The drive shaft 16, the lug plate 19, the swash plate 20, the hinge mechanism 21, the pistons 25, and the shoes 26 form a piston type compression mechanism.

Sets of suction ports 29 and suction valve flaps 30 and sets of discharge ports 31 and discharge valve flaps 32 are formed in the valve plate assembly 13. Each set of the suction port 29 and the corresponding suction valve flap 30 and each set of the discharge port 31 and the corresponding discharge valve flap 30 correspond to one of the cylinder bores 24 (compression chambers).

A suction chamber 27 and a discharge chamber 28 are defined in the rear housing member 14. The front ends of the suction chamber 27 and the discharge chamber 28 are closed by the valve plate assembly 13. As each piston 25 moves from the top dead center position to the bottom dead center position, refrigerant gas is drawn into the corresponding cylinder bore 24 (compression chamber) through the corresponding suction port 29 while flexing the suction valve flap 30 to an open position. Low pressure refrigerant gas that is drawn into the cylinder bore 24 is compressed to a predetermined pressure as the piston 25 is moved from the bottom dead center position to the top dead center position. Then, the gas is discharged to the discharge chamber 28 through the corresponding discharge port 31 while flexing the discharge valve flap 32 to an open position.

The suction chamber 27 is connected to the discharge chamber 28 by an external refrigerant circuit (not shown). Refrigerant that is discharged from the discharge chamber 28 flows into the external refrigerant circuit. The external refrigerant circuit performs heat exchange using the refrigerant. When discharged from the external refrigerant circuit, the refrigerant is drawn into the suction chamber 27. Then, the refrigerant is drawn into each cylinder bore 24 to be compressed again.

A bleed passage 33 is formed in the housing to connect the crank chamber 15 with the suction chamber 27. A supply passage 34 is formed in the housing to connect the discharge chamber 28 with the crank chamber 15. A control valve 35 is located in the supply passage 34 to regulate the opening degree of the supply passage 34.

The opening of the control valve 35 is adjusted to control the flow rate of highly pressurized gas supplied to the crank chamber 15 through the supply passage 34. The pressure in the crank chamber 15 (crank chamber pressure Pc) is determined by the ratio of the gas supplied to the crank chamber 15 through the supply passage 34 and the flow rate of refrigerant gas conducted out from the crank chamber 15 through the bleed passage 33. As the crank chamber pressure Pc varies, the difference between the crank chamber pressure Pc and the pressure in the compression chambers varies, which changes the inclination angle of the swash plate 20. Accordingly, the stroke of each piston 25, or the compressor displacement, is varied.

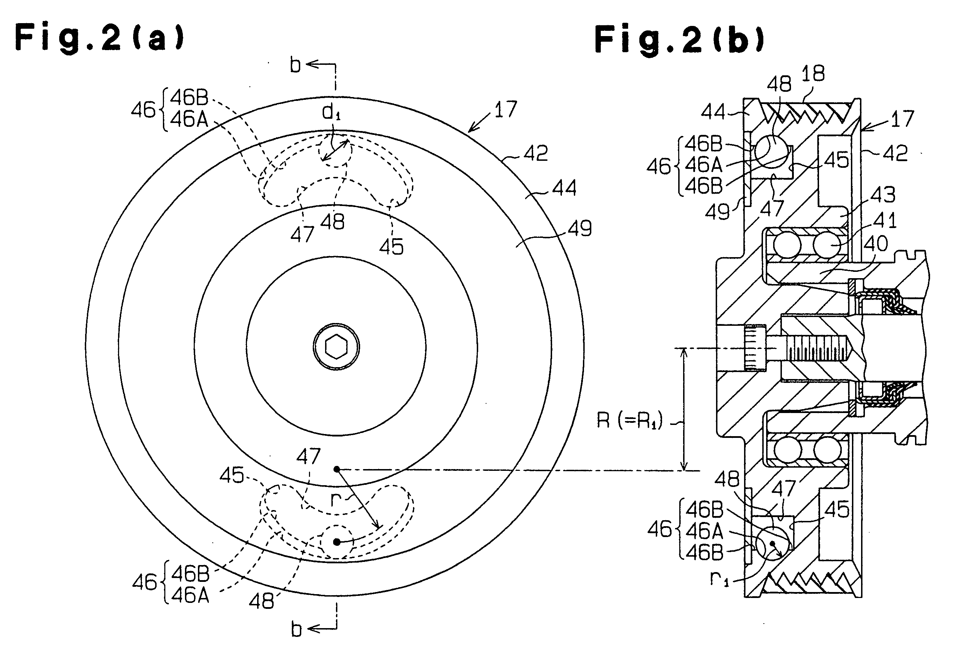

As shown in Figs. 1 and 2(b), the pulley 17 is located about and rotatably supported by the support cylinder 40 with a bearing 41. The pulley 17 is also fixed to the drive shaft 16 to rotate integrally with the drive shaft 16.

As shown in Figs. 1 and 2, the pulley 17 includes a main body 42 (rotor main body). The pulley main body 42 has a boss 43, which is fitted about the outer ring of the bearing 41, and a belt receiving portion 44, which is engaged with the belt 18. Two weight receptacles 45 are formed between the boss 43 and the belt receiving portion 44. The weight receptacles 45 are symmetrically arranged with respect to the rotation axis of the main body 42.

A weight guiding surface 46 is formed in each weight receptacle 45. A cross section of the weight guiding surface 46 along a plane perpendicular to the rotation axis of the pulley main body 42 is arcuate. The center of curvature of the weight guiding surface 46 coincides with a line that extends parallel to and is spaced from the rotation axis of the pulley main body 42 by a predetermined distance $R_1$. Each weight guiding surface 46 is formed at a side of the corresponding weight receptacle 45 that is close to the periphery of the pulley main body 42.

A weight guiding path, which is a groove 46A in this embodiment, extends along the circumferential direction of each weight guiding surface 46, or in the direction along which a weight ball 48 rolls. The cross section of the groove 46A along a plane containing the center of curvature of the weight guiding surface 46 (cross section shown in Figs. 1 and 2(b)) is arcuate. The radius of curvature of each groove 46A represented by $r_1$. Arcuate inner surfaces 46B are formed at the front and rear sides of the groove 46A in each weight guiding surface 46. The arcuate inner surfaces 46B form parts of the inner surface of a common imaginary cylinder.

An auxiliary guiding surface 47 is formed in each weight receptacle 45. The auxiliary guiding surface 47 is separated from the arcuate inner surfaces 46B toward the axis of the pulley main body 42 by a predetermined distance. As viewed from the front side of the compressor C, each weight receptacle 45 appears as an arc having a constant width with its middle portion located closer to the periphery of the pulley main body 42 than its ends. As viewed from the front side of the compressor C, each weight receptacle 45 is symmetrical with respect to an imaginary line that contains the rotation axis of the pulley main body 42 and the center of the corresponding imaginary cylinder.

A weight, which is a rigid weight ball 48 in this embodiment, is accommodated in each weight receptacle 45. The mass of each weight ball 48 is referred to as $m_1$. The diameter $d_1$ of each weight ball 48 is slightly less than the distance between the arcuate inner surfaces 46B and the auxiliary guiding surface 47. The diameter $d_1$ is equal to the doubled radius $r_1$ of curvature of the groove 46A. The axial size of each groove 46A is slightly less than the diameter $d_1$ of the weight ball 48 so that substantially a half of the weight ball 48 is fitted in the groove 46A. Each weight ball 48 linearly contacts the corresponding groove 46A with a part (substantially a half) fitted in the groove 46A. In this state, the weight ball 48 moves along the groove 46A.

An annular cover 49 is fixed to the pulley 17 by screws (not shown) to cover the receptacles 45. Even if the weight balls 48 are dislocated from the grooves 46A, the cover 49 prevents the weight balls 48 from falling off the receptacles 45. The receptacles 45 and the cover 49 form weight guides.

When the compressor C is being driven by the engine E, or when the drive shaft 16 is rotating, the weight balls 48 linearly contact the grooves 46A due to the centrifugal force (see Figs. 1 to 2(b)). If a torque is generated by rotational fluctuation of the drive shaft 16, each weight ball 48 reciprocates along the groove 46A in the corresponding weight receptacle 45. In other words, the weight ball 48, or its center of gravity, swings like a pendulum about the center of curvature of the corresponding weight guiding surface 46. That is, each weight ball 48 acts as a centrifugal pendulum when the compressor C is being driven by the engine E.

The size and weight of the weight balls 48 and the locations of the weight balls 48 in the pulley main body 42 are determined such that the torque fluctuation is suppressed by pendulum motion of the weight balls 48.

The settings of the weight balls 48, which function as centrifugal pendulums, will now be described.

The weight balls 48 suppress torque fluctuation. Specifically, each weight ball 48 suppresses a fluctuation band at a frequency that is equal to the characteristic frequency of the weight ball 48 (centrifugal pendulum). Therefore, the location, the size, and the weight of each weight ball 48 are determined such that the characteristic frequency of the weight ball 48 is set equal to the frequency of a peak component of the torque fluctuation. Accordingly, the amplitude of the peak component is suppressed, and the influence of the torque fluctuation is effectively reduced. Peak components of the torque fluctuation represent the peaks of the fluctuation band, or the components of rotation order.

The frequency of the torque fluctuation and the characteristic frequency of the weight balls 48 are proportional to the angular velocity $\omega_1$ of the drive shaft 16, which corresponds to the speed of the drive shaft 16. The frequency of the torque fluctuation when its band is greatest is represented by the product of the rotation speed of the drive shaft 16 per unit time ($\omega_1/2\pi$) and the number N of the cylinder bore 24. That is, the frequency is represented by the formula ($\omega_1/2\pi$) · N.

Through experiments, it was confirmed that an nth greatest peak (n is a natural number) of the torque fluctuation has a value equal to a product n ($\omega_1/2\pi$) · N.

The characteristic frequency of the weight balls 48 is obtained by multiplying the rotation speed of the drive shaft 16 per unit time ($\omega_1/2\pi$) with the square root of the ratio R/r. The sign R represents the distance between the rotation axis of the pulley main body 42 and the axis of the pendulum motion of each weight ball 48. The sign r represents the distance between the axis of the pendulum motion of each weight ball 48 and the center of gravity of the weight ball 48.

Therefore, by equalizing the square root of the ratio R/r with the product n · N, the characteristic frequency of the weight balls 48 are equal to the frequency of the nth greatest peak of the torque fluctuation. Accordingly, the torque fluctuation at the nth greatest peak is suppressed.

To suppress the greatest peak of the torque fluctuation, the values of the distances R and r are determined such that the square root of the ratio R/r is equal to N, or the value of the product n · N when n is one.

The torque produced about the rotation axis of the pulley main body 42 by the weight balls 48 is represented by a sign T. To effectively reduce the torque fluctuation by the pendulum motion of the weight balls 48, the torque T needs to counter the torque fluctuation and the range of the torque T needs to be equal to the range of the fluctuation. When the frequency of a peak of the torque fluctuation is equal to the characteristic frequency of the weight balls 48, the torque T is represented by the following equation.

$$\text{(Equation 1)} \quad T = m \cdot (\omega_a)^2 \cdot (R+r) \cdot R \cdot \phi$$

In the equation 1, the sign m represents the total mass of the weight balls 48 ($m = 2m_1$), and the $\varphi$.

In this embodiment, the mass m is maximized to minimize the values R, r, and φ, so that the size of the pulley main body 42 is minimized, and the torque T is maximized.

The center of curvature of each weight guiding surface 46 coincides with the axis of the pendulum motion of the corresponding ball 48. That is, the distance $R_1$ between the rotation axis of the pulley main body 42 and the center of curvature of each weight guiding surface 46 corresponds to the distance R.

The settings are determined by regarding the weight ball 48 as a particle at the center of gravity.

The operation of the compressor C will now be described.

When the power of the engine E is supplied to the drive shaft 16 through the pulley 17, the swash plate 20 rotates integrally with the drive shaft 16. As the swash plate 20 rotates, each piston 25 reciprocates in the associated cylinder bore 24 by a stroke corresponding to the inclination angle of the swash plate 20. As a result, suction, compression and discharge of refrigerant gas are repeated in the cylinder bores 24.

If the opening degree of the control valve 35 is decreased, the flow rate of highly pressurized gas supplied to the crank chamber 15 from the discharge chamber 28 through the supply passage 34 is decreased. Accordingly, the crank chamber pressure Pc is lowered and the inclination angle of the swash plate 20 is increased. As a result, the displacement of the compressor C is increased. If the opening degree of the control valve 35 is increased, the flow rate of highly pressurized gas supplied to the crank chamber 15 from the discharge chamber 28 through the supply passage 34 is increased. Accordingly, the crank chamber pressure Pc is raised and the inclination angle of the swash plate 20 is decreased. As a result, the displacement of the compressor C is decreased.

During rotation of the drive shaft 16, the compression reaction force of refrigerant and reaction force of reciprocation of the pistons 25 are transmitted to the drive shaft 16 through the swash plate 20 and the hinge mechanism 21, which torsionally (rotationally) vibrates the drive shaft 16. The torsional vibrations generate torque fluctuation. The torque fluctuation causes the compressor C to resonate. The torque fluctuation also produces resonance between the compressor C and rotary machines (the engine E and auxiliary devices), which are connected to the pulley 17 by the belt 18.

When the torque fluctuation is produced, the weight balls 48 start swinging like pendulums. The pendulum motion of the weight balls 48 produces torque about the rotation axis of the pulley main body 42. The produced torque suppresses the torque fluctuation. The characteristic frequency of each weight ball 48 is equal to the frequency of the greatest peak of the torque fluctuation. Therefore, the peak of the torque fluctuation is suppressed, which effectively reduces the torque fluctuation of the pulley 17. As a result, the resonance produced by the torque fluctuation is effectively suppressed.

The present embodiment has the following advantages.

(1) The weight balls 48 are provided in the pulley main body 42. The axis of each weight ball 48 is spaced from the rotation axis of the pulley main body 42 by the predetermined distance $R_1$ and is parallel to the rotation axis of the pulley main body 42. Each weight ball 48 swings like a pendulum about its axis. The pendulum motion of the weight balls 48 suppresses the torsional vibration of the pulley 17, which suppresses resonance produced in the compressor C. Further, the pendulum motion suppresses resonance produced between the compressor C and the rotary machines that are coupled to the pulley 17 by the belt 18.

(2) The groove 46A is formed in each weight guiding surface 46. A cross section of each groove 46A along a plane containing the axis of pendulum motion of the corresponding weight ball 48 is not parallel to the axis of the pendulum motion. The weight ball 48 is pressed against the groove 46A by centrifugal force, which prevents the weight ball 48 from moving in the axial direction. Therefore, the weight ball 48 is prevented from colliding with the inner walls of the weight guide, which reduces the noise.

(3) Each groove 46A, which contacts one of the weight balls 48, has an arcuate cross section along a plane containing the axis of the pendulum motion. The radius $r_1$ of curvature of the groove 46A is equal to a half of the diameter $d_1$ of the weight ball 48, or the radius of the weight ball 48. Therefore, when the weight ball 48 swings along the groove 46A, there is no clearance between the weight ball 48 and the groove 46A that permits the weight ball 48 to move axially.

(4) The axial size of each groove 46A is slightly less than the diameter $d_1$ of the weight ball 48 so that substantially a half of the weight ball 48 is fitted in the groove 46A. Compared to a case in which the axial size of the groove 46A is narrower, a greater part of the weight ball 48 is located in the groove 46A when the weight ball 48 swings along the groove 46A. Therefore, the weight ball 48 is less likely to be dislocated.

It should be apparent to those skilled in the art that the present invention may be embodied in many other specific forms without departing from the spirit or scope of the invention. Particularly, it should be understood that the invention may be embodied in the following forms.

In the embodiment of Figs. 1 to 2(b), the cross section of each groove 46A along the plane containing the axis of the pendulum motion is arcuate. The axial size of each groove 46A is determined such that a half of the corresponding weight ball 48 is received by the groove 46A. However, the axial size of each groove 46A may be changed. For example, the axial size of each groove 46A may be determined such that a smaller portion of the weight ball 48 is received by the groove 46A.

In the embodiment of Figs. 1 to 2(b), the weight guides (the weight receptacles 45) are arcuate and have a constant width when viewed from the front side of the compressor C. However, the shape of each weight receptacle 45 may be changed. As long as each weight receptacle 45 has a weight guiding surface, the shape of the weight receptacle 45 may be changed, for example, to a circular shape.

In the embodiment of Figs. 1 to 2(b), the diameter $d_1$ of each weight ball 48 is equal to the doubled radius $r_1$ of curvature of the groove 46A. However, the diameter $d_1$ may be changed. For example, the diameter $d_1$ may be less than the doubled radius $r_1$. In this case, even if an external force in the axial direction of the pendulum motion is applied to the weight ball 48, the weight ball 48 remains contacting the surface of the groove 46A and reciprocates along the width of the groove 46A. That is, noise due to collision between the weight ball 48 and the groove 46A is prevented. If the diameter $d_1$ is greater than the doubled radius $r_1$, the weight ball 48 is prevented from moving in the axial direction by the edges of the groove 46A.

In the embodiment of Figs. 1 to 2(b), each groove 46A, which contacts the weight ball 48, has an arcuate cross section along a plane containing the axis of the pendulum motion. However, the cross section of the groove 46A may be U-shaped. In other words, the cross section of the groove 46A may be changed as long as there is no clearance between the weight ball 48 and the groove 46A that permits the weight ball 48 to move axially when the weight ball 48 swings along the groove 46A.

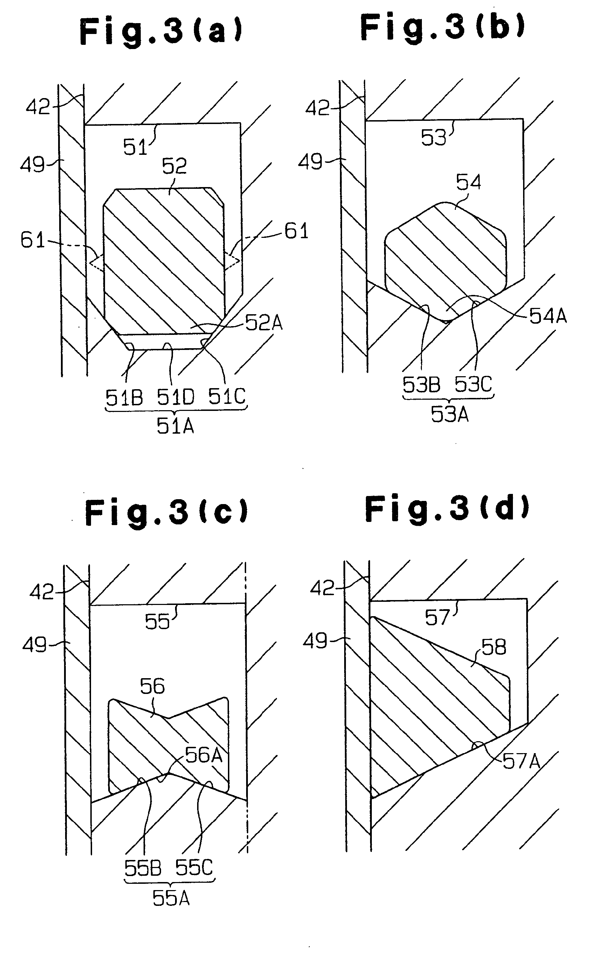

In the embodiment of Figs. 1 to 2(b), the cross section of part of each weight guiding surface 46 along the plane containing the axis of the pendulum motion is arcuate. However, at least part of each weight guiding surface may include an inclined surface and formed as a projection or a groove that extends along the reciprocation direction of the weight. In this case, the outer shape of the weight is preferably shaped to fit the projection or the groove formed in the weight receptacle. Figs. 3(a) to 3(c) describe weight receptacles of such embodiments. Figs. 3(a) to 3(c) are cross-sectional views of the cover 49, weight receptacles 51, 53, 55 forming weight guides, and weights, which are rollers (52, 54, 56) located in the weight receptacles (51, 53, 55) taken along a plane containing the axis of the pendulum motion of the rollers (52, 54, 56).

The weight receptacle 51 shown in Fig. 3(a) has a weight guiding surface 51A. Inclined sections 51B, 51C are formed in the axial ends of the weight guiding surface 51A. Therefore, the weight guiding surface 51A is formed as a groove extending along the reciprocation direction of the substantially cylindrical roller 52. An arcuate surface 51D is formed between the inclined section 51B, 51C. The arcuate surface 51D is a part of an imaginary cylinder the center of which coincides with the axis of the pendulum motion. The roller 52 has an annular projection 52A. The projection 52A fits in the groove defined by the inclined sections 51B, 51C.

The weight receptacle 53 shown in Fig. 3(b) has a weight guiding surface 53A. Inclined sections 53B, 53C are formed in the guiding surface 53A. Therefore, the weight guiding surface 53A is formed as a groove extending along the reciprocation direction of the roller 54. The inclined sections 53B, 53C are adjacent to each other. The roller 54 has an annular projection 54A. The projection 54A fits in the groove defined by the inclined sections 53B, 53C.

The weight receptacle 55 shown in Fig. 3(c) has a weight guiding surface 55A. Inclined sections 55B, 55C are formed in the guiding surface 55A. Therefore, the guiding surface 55A is formed as a projection extending along the reciprocation direction of the roller 56. The inclined sections 55B, 55C are adjacent to each other. The roller 56 has an annular groove 56A. The groove 56A fits on the projection defined by the inclined sections 55B, 55C. In the embodiments of Figs. 3(a) to 3 (c), the engagement between the weight and the groove or the projection prevents the weight from being displaced in the axial direction. Therefore, the weight is prevented from colliding with the inner walls of the weight guide.

In the embodiment of Fig. 3(c), the pulley main body 42 is formed by coupling two pieces the boundary of which is shown by broken lines. The pulley pieces are molded by dies that move along the axial direction of the pulley main body 42 and then coupled to each other. Therefore, undercuts are not formed. This facilitates the forming of the pulley main body 42 and reduces the cost.

The cross section of the weight guiding surface along the plane containing the axis of the pendulum motion may form a line that is inclined relative to the axis of the pendulum motion. Figs. 3(d) describes such an embodiment.

Figs. 3(d) is cross-sectional view of the cover 49, a weight receptacle 57 forming a weight guide, and a weight, which is a roller 58, located in the weight receptacles 57 taken along the plane containing the axis of the pendulum motion of the roller 58. The weight receptacle 57 includes a roller guiding surface 57A. The roller guiding surface 57A is inclined that the weight receptacle 57 is radially widened toward the open end (the left end as viewed in Fig. 3(d)). The roller 58 swings along the guide 57A like a pendulum. The roller 58 is formed as a frustum. The circumference of the roller 58 is inclined such that the roller 58 linearly contacts the guide 57A.

When the roller 58 is swinging along the guiding surface 57A, the front end (the left end as viewed in Fig. 3(d)) of the roller 58 contacts the cover 49, which is located at the open end of the weight receptacle 57. The contact between the guiding surface 57A and the circumference of the roller 58 prevents the roller 58 from moving rearward (rightward as viewed in Fig. 3(d)). Also, the contact between the cover 49 and the front surface of the roller 58 prevents the roller 58 from moving forward. Therefore, the weight is prevented from colliding with the inner walls of the weight guide.

In the embodiment of Figs. 3(d), the pulley main body 42 is molded by dies that move along the axial direction of the pulley main body 42. The guide 57A is formed when the pulley main body 42 is molded. Therefore, undercuts are not formed. This facilitates the forming of the pulley main body 42 and reduces the cost.

In the embodiment of Fig. 3(d), the weight receptacle 57 is radially widened toward the open end. However, the weight receptacle 57 may be narrowed toward the open end. In this case, the weight (roller) is prevented from moving in the axial direction by the guiding surface and the wall that faces the cover 49.

In the embodiment of Fig. 3(d), the weight is formed like a fulcrum linearly contacts the guiding surface. However, the weight may be spherical and in point contact with the guiding surface.

For example, an axial projection 61 may be formed on either side of the weight (52) as illustrated by broken lines in Fig. 3(a). In this case, when the weight moves in the axial direction, the projections 61 contact the inner walls of the weight guide. Therefore, compared to a case where there is no axial projections like projections 61 and the entire axial surfaces contact the inner walls when the weight moves axially, the weight having the projections 61 contacts the inner walls at smaller areas and produces less noise. In other words, the noise is reduced.

In the embodiment of Figs. 1 to 2(b), the square root of the ratio R/r is equal to N, which is the value of n · N when the n is one. However, the square root of the ratio R/r may be the value of n · N when n is a natural number that is greater than one.

In the embodiment of Figs. 1 to 2(b), the pulley main body 42 has two weight guides each accommodating a weight. However, the number of the weight guides may be changed. The number of the weight guides need not correspond to the number of the cylinder bores of the compressor C. If the pulley main body 42 has only one mass, the pulley main body 42 may have a balancer such as a weight or a thinned portion to prevent the center of gravity of the pulley main body 42 from being displaced.

If the pulley main body 42 has two or more weights, the ratio R/r of the weights may be different. Since there is two or more values of the ratios R/r of the weights, the bands of two or more peaks (rotation order) of the torque fluctuation are suppressed. In this case, the values n are preferably selected from numbers in order from one. For example, when three numbers are selected, one, two and three are preferably used. Accordingly, the square roots of the ratios R/r correspond to the numbers represented by the products n · N, in which the value n is one, two and three. Therefore, the three greatest peaks of the torque fluctuation are suppressed. That is, the resonance is effectively suppressed.

In the illustrated embodiments, the settings are determined by regarding each weight as a particle at the center of gravity. However, the settings are preferably determined by taking the inertial mass of each weight into consideration. For example, in the case of the weight balls 48, the settings are preferably made based on the ratio 5R/7r instead on the ratio R/r so that the inertial mass of the weight balls 48 are taken into consideration. When the frequency of a peak of the torque fluctuation is equal to the characteristic frequency of the weight balls 48, the torque T is represented by the following equation.

$$\text{(Equation 2)} \quad T = (7/5) \cdot m \cdot (\omega_a)^2 \cdot (R+r) \cdot R \cdot \phi$$

If the weights are formed in a shape other than spherical shapes, the settings are preferably made by taking the inertial mass of the weight into consideration so that the resonance is effectively suppressed.

In the illustrated embodiments, the pulley 17 is used for the compressor C, which has the single headed pistons 25. However, the pulley 17 may be used for a compressor that has double-headed pistons. In this type of compressor, cylinder bores are formed on either side of a crank chamber and each piston compresses gas in the corresponding pair of the cylinder bores.

In the illustrated embodiment, the cam plate (the swash plate 20) rotates integrally with the drive shaft 16. However, the present invention may be applied to a compressor in which a cam plate rotates relative to a drive shaft. For example, the present invention may be applied to a wobble type compressor.

The present invention may be applied to a fixed displacement type compressor, in which the stroke of the pistons are not variable.

In the illustrated embodiments, the present invention is applied to a reciprocal piston type compressor. However, the present invention may be applied to rotary compressors such as a scroll type compressor

The present invention may be applied to any type or rotor other than pulley. For example, the present invention may be applied to a sprocket or a gear.

The present invention may be applied to a rotating member located in the housing of the compressor C. For example, the lug plate 19, which is located in the housing and coupled to the drive shaft 16, may have the weights to suppress the rotational vibrations produced in the drive shaft 16. In this case, resonance in the compressor C is suppressed and noise produced by collision between the weights and the weight guides is reduced. Moreover, since the weights are located in the compressor C, little noise escapes the compressor C.

In the illustrated embodiments, the present invention 5 is applied to the compressor C. However, the present invention may be applied to other apparatuses. Specifically, the present invention may be applied to any apparatus in which rotational vibration is produced.

The axis of the pendulum motion of each weight need not be parallel to the rotation axis of the rotor. Specifically, the axis of the pendulum motion may be inclined relative to the rotation axis of the rotor in a range in which the maximum torque fluctuation is suppressed by a desirable degree.

Therefore, the present examples and embodiments are to be considered as illustrative and not restrictive and the invention is not to be limited to the details given 0 herein, but may be modified within the scope and equivalence of the appended claims.

A rotor has a main body (42). A weight guide (45, 49, 51, 53, 55, 57) is recessed in the main body (42). A weight accommodated in the weight guide contacts with and rolls on a weight guiding surface. The weight swings like a pendulum about a second axis that is parallel to and offset from the rotation axis. The weight guiding surface guides the weight to keep the weight moving within the guiding surface.

**Claims**

1.  A rotor having a weight guide (45, 49, 51, 53, 55, 57) is recessed in a main body (42), wherein a weight that is accommodated in the weight guide and contacts with and rolls on a weight guiding surface, wherein the weight swings like a pendulum about a second axis, and wherein the second axis is parallel to and offset from the rotation axis, **characterized in that** the weight guiding surface guides the weight to keep the weight moving within the guiding surface.

2.  The rotor according to claim 1, **characterized in that** the weight guide surface has a U-shaped cross-sectional surface along a plane that contains the second axis.

3.  The rotor according to claims 1 or 2, **characterized in that** the weight guide surface has an inclined cross-sectional surface along a plane that contains the second axis.

4.  The rotor according to any one of the preceding claims, **characterized in that** an annular groove or an annular projection is formed in the circumferential portion of the weight, and wherein a weight guiding path engaging with the circumferential portion of the weight is formed in the weight guiding surface, the weight guiding path being a projection or a groove.

5.  The rotor according to claim 4, **characterized in that** an inclined section (51B, 51C, 53B, 53C, 55B, 55C) is formed in at least part of the weight guiding surface.

6.  The rotor according to claims 4 or 5, **characterized in that** the weight guiding path on the weight guiding surface is a projection, and wherein the circumferential portion of the weight has an annular groove.

7.  The rotor according to any one of the preceding claims, **characterized in that** the rotor is a pulley for transmitting power.

Fig.1

# Fig.2(a)

# Fig.2(b)

EP 1 270 901 A2

# Fig.3(a)

# Fig.3(b)

# Fig.3(c)

# Fig.3(d)